Europäisches Patentamt

(19) European Patent Office

Office européen des brevets

(11) Numéro de publication: **0 060 308**
**B1**

(12) **FASCICULE DE BREVET EUROPEEN**

(45) Date de publication du fascicule du brevet: **12.09.84**

(51) Int. Cl.³: **A 22 C 29/02**

(21) Numéro de dépôt: **81101833.2**

(22) Date de dépôt: **12.03.81**

(54) **Appareil pour la préparation mécanique de mollusques, en particulier de calmars.**

(43) Date de publication de la demande:
**22.09.82 Bulletin 82/38**

(45) Mention de la délivrance du brevet:
**12.09.84 Bulletin 84/37**

(84) Etats contractants désignés:
**DE**

(56) Documents cités:
**US-A-2 370 947**
**US-A-3 566 437**
**US-A-3 947 921**

(73) Titulaire: **FRISCO-FINDUS AG**
**CH-9400 Rorschach (CH)**

(72) Inventeur: **Olsson, Sven**
**Palsjögatan 6**
**S-252 41 Hälsingborg (SE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention concerne un appareil pour la préparation de mollusques, en particulier de calmars.

Les calmars ou les seiches (Loligo vulgaris, Sepia officinalis et autres espèces) constituent un produit alimentaire très apprécié dans de nombreux pays.

Le calmar est constitué d'un tronc ou manteau fusiforme qui comporte deux nageoires ou "ailes" longitudinales et renferme les organes internes tels que le tube digestif, la poche à encre, les branchies, etc. Les organes internes aboutissent dans la tête qui porte les dix bras ou tentacules dont deux sont plus longs que les autres. La coquille rudimentaire ou "plume", qui est généralement constituée d'un disque fusiforme de chitine, portant parfois des dépôts de chaux, est enrobée dans la paroi du manteau. Les viscères sont attachés à la paroi intérieure du manteau, le long de ce dernier, à l'emplacement où la plume est enrobée, mais ils sont par ailleurs relativement libres par rapport au manteau.

Les parties de la seiche ou du calmar que l'on mange communément comprennent le manteau et parfois les tentacules. Pour la préparation du calmar pour la consommation, il est donc nécessaire d'enlever la tête et les viscères, ainsi que la plume du manteau, et si l'on souhaite utiliser les tentacules, il est également nécessaire de les séparer de la tête. Les ailes et une mince peau recouvrant l'extérieur du manteau sont en générale également retirées pour la préparation du manteau.

La préparation du calmar pour la production de rondelles ou anneaux est relativement difficile et exige l'exécution de plusieurs opérations. La tête et les viscères qui lui sont associés doivent d'abord être détachés de l'intérieur du manteau, puis tirés hors du manteau, la plume étant ensuite enlevée. Ceci peut souvent être difficile, car la plume est enrobée dans le tissue musculaire de la paroi du manteau, qui est parfois relativement dure. Si les tentacules doivent être utilisées, elles sont en général coupées de la tête avant que cette dernière soit retirée du manteau. Pour ces raisons, la préparation du calmar a, jusqu'à présent, été effectuée manuellement, dans la plupart des cas, ce qui est coûteux lorsque de grandes quantités de calmars sont manipulées. Il est clair qu'il serait très avantageux, pour des questions d'économie et de personnel, de pouvoir effectuer autant que possible mécaniquement la préparation du calmar. Cependant, jusqu'à présent, il n'est apparu aucun appareil disponible permettant d'effectuer cette opération efficacement et avec de bons résultats.

Le brevet des Etats-Unis d'Amérique N° 3 947 921 décrit un appareil pour la préparation et l'éviscération du calmar. Dans cet appareil, le manteau du calmar est serré entre des rouleaux mobiles pendant que la tête et les viscères qui lui sont associés sont tirés vers l'extérieur. La manteau est ensuite conduit entre une série de paires de rouleaux montées de manière que l'écartement des rouleaux diminue progressivement d'une paire de rouleaux à l'autre et que les vitesses périphériques des rouleaux augmentent successivement. Il est indiqué que la plume est détachée et libérée et que la peau recouvrant le manteau est éliminée par ce travail mécanique du manteau. Cependant, il est apparu qu'un travail effectué dans cet appareil connu ne donne pas satisfaction en ce qui concerne la sûreté avec laquelle la plume est enlevée, car la plume reste la plus souvent en place. En outre, l'enlèvement des viscères n'est pas complet lorsque la tête est tirée vers l'extérieur, car l'attache entre les viscères et la paroi du manteau n'est pas coupée. Ces inconvénients sont éliminés par la présente invention.

L'invention concerne un appareil pour la préparation du calmar, comprenant les postes suivants:

a) un poste pour attacher le calmar à un dispositif de maintien le tenant fixement pendant la préparation;

b) un poste comportant un couteau destiné à couper les tentacules du calmar, sa tête restant en place;

c) un poste comportant un dispositif de coupe destiné à détacher les viscères de la paroi du manteau du calmar, et un dispositif de prise destiné à prendre et extraire la tête du calmar et les viscères qui lui sont associés;

d) un poste pour enlever au moins une partie du tissue situé à l'intérieur du manteau, au-dessus de la plume du calmar;

e) un poste comportant un dispositif de prise destiné à prendre et extraire la plume du manteau; et facultativement,

f) un dispositif destiné à enlever le manteau préparé du dispositif de maintien et à transporter le manteau pour qu'il soit soumis à un autre traitement; et

g) un dispositif destiné à transporter le dispostif de maintien et le calmar pour les faire passer successivement dans les potes a)—f) et pour ramener le dispositif de maintien au poste a) afin qu'il reçoive un nouveau calmar.

Dans une forme préférée de réalisation de l'invention, les divers postes de traitement sont disposés en cercle et le dispositif de maintient et le calmar sont transportés successivement et pas à pas dans chacun des postes. Lorsque la préparation d'un calmar est finié, le dispositif de maintien est de cette manière revenu dans la position de départ, et un nouveau cycle de traitement peut commencer.

L'invention sera décrite plus en détail en regard des dessins annexés à titre d'exemple nullement limitatif et sur lesquels:

la figure 1 est une vue schématique de dessus de l'appareil selon l'invention;

la figure 2 est une vue latérale de l'appareil de la figure 1; et

les figures 3 à 8 montrent schématiquement le traitement du calmar dans les divers postes de traitement.

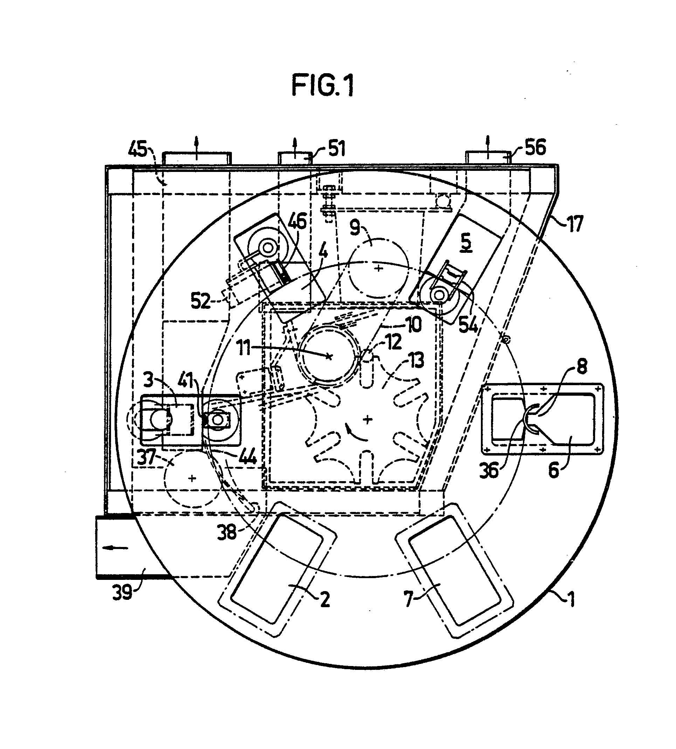

L'appareil représenté sur la figure 1 comprend un plateau tournant 1 dans lequel sont réalisées des ouvertures équidistantes 2—7, proches de la périphérie de ce plateau. Les divers moyens de traitement sont montés de manière à traiter le calmar en passage dans les ouvertures, le calmar étant relié à un dispositif de maintien indiqué globalement en 8 et disposé au-dessus des ouvertures afin que les moyens de traitement puissent travailler sur le calmar. Un élément de maintien est disposé au-dessus de chacune des ouvertures, mains, pour plus de clarté, un seul de ces éléments est représenté dans la position 6.

Le plateau est destiné à être mis en rotation de manière que chaque ouverture soit déplacée pas à pas vers la position de l'ouverture la précédant immédiatement, le dispositif de maintien, portant le calmar, étant entraîné. Sur le dessin, six ouvertures sont représentées et, par conséquent, chaque mouvement correspond à un sixième de tour. Le mouvement pas à pas est produit au moyen d'un mécanisme à croix de Malte, connu en soi, dans lequel un moteur 9 de commande entraîne l'arbre principal 11 par l'intermédiaire, par exemple, d'une chaîne 10, l'arbre principal faisant tourner pas à pas la croix de Malte 13 par l'intermédiaire d'un axe 12, ladite croix étant fixée à un arbre 14 solidaire du plateau. Il est également possible d'utiliser d'autres moyens permettant d'obtenir une rotation intermittente, par exemple des moteurs pas à pas de divers types.

Les divers postes de traitement sont disposés juste au-dessous des ouvertures du plateau lorsque ce dernier est en position de repos. Le poste b) destiné à sectionner les tentacules constitue une exception, car il est placé au-dessous du disque formé par le plateau, entre les deux positions d'arrêt des ouvertures du plateau, indiquées, respectivement, en 2 et 3. Le poste c), destiné à détacher les viscères de la paroi du manteau et à extraire la tête et les viscères qui luis sont associés, est placé en position 3. Le poste d), destiné à enlever une partie du tissu de la paroi du manteau, en avant de la position de la plume dans le manteau, est disposé dans la position 4, et le poste e), destiné à prendre et extraire la plume du manteau, est placé dans la position 5. Dans la position 6, le manteau du calmar préparé peut être enlevé du dispositif de maintien et transporté pour être soumis à d'autres opérations de traitement telles que l'enlèvement des ailes et de la peau extérieure. Il est possible de retirer le calmar du dispositif de maintien manuellement ou mécaniquement dans un poste spécial de traitement f).

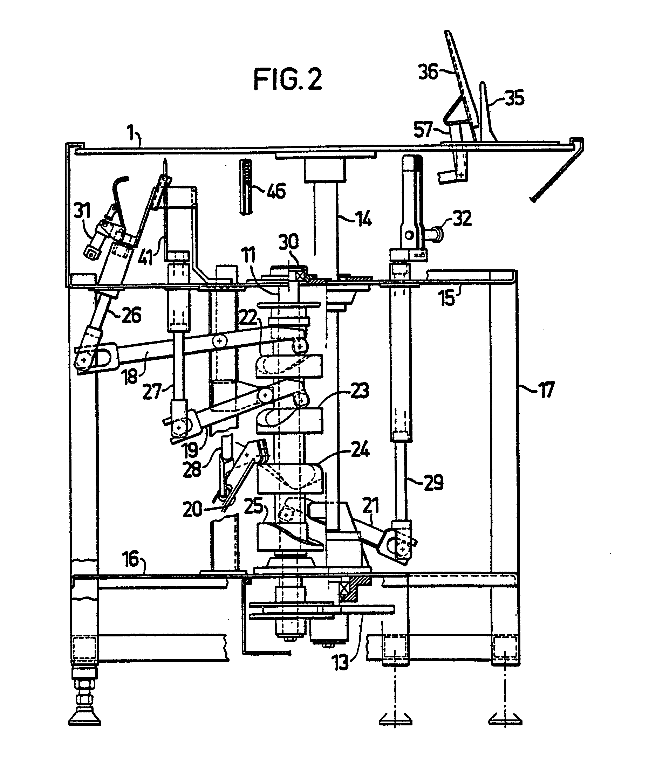

La figure 2 est une vue latérale schématique de l'appareil selon l'invention, suivant la ligne II—II de la figure 1. Cette vue montre comment le plateau 1 est supporté par son arbre 14 portant la croix de Malte 13 qui est entraînée par l'arbre principal 11. L'arbre principal et les divers postes de traitement sont supportés par deux plans 15 et 16 de support qui, eux-mêmes, sont supportés par un châssis 17 qui n'est représenté que de manière suggérée sur les dessins.

Les différents dispositifs de traitement de l'appareil sont commandés au moyen de leviers 18, 19, 20 et 21 qui sont guidés de manière connue par des disques 22, 23, 24 et 25 de came. Les leviers sont reliés à des biellettes 26, 27, 28 et 29 de poussée et de traction destinées à actionner les divers postes de traitement. L'arbre principal est entraîné par le moteur 9 de commande (figure 1) et il est supporté dans le plan supérieur 15 de support par un palier 30.

Les divers postes de traitement sont desservis par des cylindres de compression représentés en 31 et 32, et par des moteurs dont l'un est représenté en 53 sur la figure 1.

Le fonctionnement de l'appareil sera décrit plus en détail ci-après.

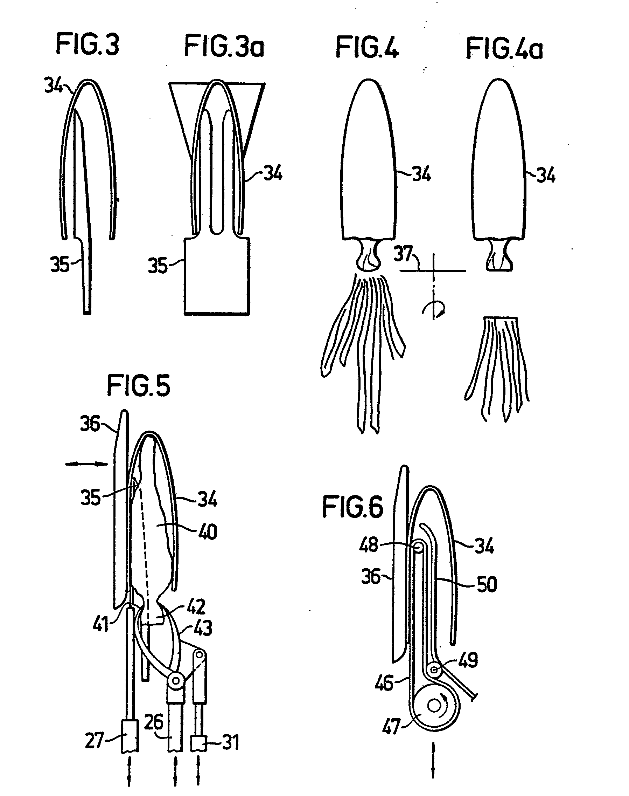

Dans le poste a), le calmar est attaché à un élément de maintien, comme montré sur les figures 3 et 3a qui représentent le manteau 34 du calmar relié à l'élément 35 de maintien, vu par le côté (figure 3) et par le devant (figure 3a). L'élément de maintien se présente sous la forme d'un dispositif en U dont les deux branches sont disposées contre le manteau, de manière à porter sur chaque côté de la partie de ce dernier comportant la plume. L'attache des viscères à la paroi du manteau se trouve donc entre les deux branches. La fixation du calmar à l'élément de maintien est de préférence réalisée à la main dans le cas décrit. La hauteur de l'élément de maintien au-dessus du plateau 1 est déterminée de manière que le calmar soit suspendu la tête en bas, au niveau du plateau, les tentacules pendant vers le bas en passant dans l'ouverture du plateau. Comme montré sur la figure 2, il est possible d'ajouter à l'élément 35 de maintien une plaque 36 de support courbée suivant un demicercle et soutenant le manteau pendant les diverses phases du traitement.

En se déplaçant de la position 2 vers la position 3 indiquées sur la figure 1, le calmar passe à proximité d'un organe de coupe qui coupe les tentacules. Dans une forme préférée de réalisation, l'organe de coupe comprend un couteau rotatif 37 disposé à proximité de la face inférieure du plateau et ayant de préférence une forme circulaire. La rotation de ce couteau est avantageusement déclenchée lorsque la tête ou les tentacules du calmar entrent en contact avec un brass 38 de détection. Les tentacules coupées tombent dans une goulotte 39 et elles peuvent ensuite être utilisées, car elles sont considérées comme une partie savoureuse du calmar, dans de nombreux cas. Lorsque le calmar a dépassé le couteau rotatif et qu'il n'est plus en contact avec le bras de détection, la rotation du couteau est arrêtée afin d'éviter toute consommation inutile d'énergie. La coupe des tentacules dans le poste de traitement b) est également montrée schématiquement sur les figures 4 et 4a, la figure 4 montrant le calmar avant l'entrée en contact avec le couteau rotatif 37, représenté schématiquement, et la figure 4a montrant le calmar après la coupe des tentacules.

Dans le poste de traitement c), qui est situé dans la position 3 sur la figure 1, les viscères 40 sont détachés due manteau et la tête et les viscères qui lui sont associés sont tirés vers l'extérieur. Ceci est également montré schématiquement sur la figure 5. Pour détacher les viscères de la paroi du manteau, une lame étroite 41 de couteau est élevée verticalement dans l'espace compris entre les deux branches de l'élément 35 de maintien de forme en U et le manteau 34. L'extrémité supérieure de la lame du couteau présente la forme d'un U ou d'un V peu profond et elle comporte une arête de coupe qui sectionne la liaison entre les viscères et la paroi du manteau. En même temps que l'attache est coupée, la tête 42 est saisie au moyen d'un dispositif 43 de prise qui est déplacé vers le haut à l'aide de la biellette 26 actionnée par le levier 18 et le disque 22 de came. Le dispositif de prise comprend une mâchoire de prise qui est fermée par un cylindre 31 de compression actionné par l'intermédiaire d'un bras 44 de détection. Sous l'action de guidage partant du disque 22 de came et se transmettant par le levier 18, la biellette 26 est ensuite tirée vers le bas alors que le dispositif de prise retient la tête. De cette manière, la tête et les viscères qui lui sont associés sont tirés hors du manteau. Sous l'action du bras 44 de détection, le cylindre 31 de compression ouvre ensuite le dispositif 43 de prise afin que la tête et les viscères tombent dans la goulotte 45 pour pouvoir être ensuite éliminés. Le mouvement de montée et de descente de la lame 41 de couteau est commandé par le disque 23 de came et par l'intermédiare du levier 19 et de la biellette 27 de traction et de poussée.

L'élément de maintien, portant le manteau du calmar, est ensuite de nouveau déplacé vers la position 4 de la figure 1 où se trouve le poste de traitement d) dans lequel une partie du tissu de la portion du manteau située au-dessus de la plume est retirée. Ceci est nécessaire pour que la plume puisse être détachée de manière sûre, et la figure 6 montre une forme préférée de réalisation pouvant effectuer cette opération. Ainsi, une bande étroite et menée 46 de râpage ou de raclage est introduite dans le manteau 34 de manière à éliminer par râpage ou raclage la partie du tissue du manteau se trouvant au-dessus de la position de la plume. La bande doit donc être introduite dans le manteau entre les deux branches de l'élément 35 de maintien de forme en U, à l'émplacement de la plume. La bande de râpage ou de raclage est entraînée au moyne d'un rouleau 47 de commande et elle est guidée par des rouleaux 48 et 49 de guidage. Pour simplifier l'introduction de la bande dans le manteau, une plaque 50 de guidage peut être disposée sur la face opposée de la partie active de la bande. Le tissu détaché par râpage tombe dans une goulotte 51 (figure 1) et il peut en être enlevé.

La bande est entraînée par un moteur 52 et, au moyen d'un bras de détection convenablement disposé (non représenté), elle n'est entraînee que lorsqu'elle est introduite dans le manteau. L'ensemble constitué par la bande et son moteur de commande est déplacé verticalement au moyen de la biellette 28 de poussée de traction qui est guidée par le disque 24 de cam par l'intermédiaire du levier 20.

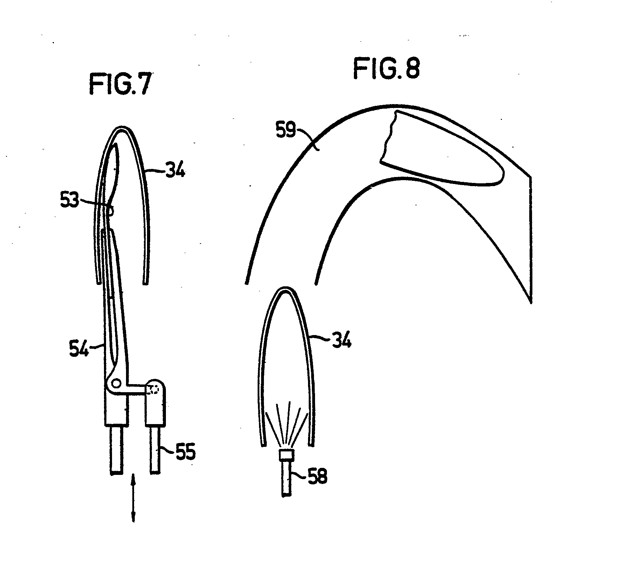

Dans le poste de traitement e) qui est situé dans la position 5 sur la figure 1, la plume est saisie et extraite du manteau. Ceci est montré plus en détail sur la figure 7. La plume 53 est saisie au moyen d'une pince 54 qui est commandée par la tige 55 d'un cylindre de compression indiqué en 32 sur la figure 2. La pince est déplacée verticalement au moyen de la biellette 29 de traction et de poussée qui est guidée par le disque 25 de came par l'intermédiaire du levier 21. Grâce à la mise en oeuvre d'un organe convenable de détection (non représenté), la pince saisit la plume après qu'elle a atteint sa position haute et elle libère la plume après qu'elle a été extraite du manteau. La plume est relâchée de manière à tomber dans une goulotte 56 de laquelle elle peut être retirée.

La prise de la plume 53 peut être facilitée par une pression de la partie inférieure du manteau vers l'avant, contre le dispositif de prise, de manière que la plume dépasse sensiblement de la paroi du manteau. En variante, la partie supérieure du manteau peut être inclinée vers l'arrière à partir du dispositif de prise. Ceci est illustré sur la figure 2 qui montre comment la plaque 36 de support peut être inclinée vers l'arrière à partir de l'élément 35 de maintien au moyen d'une tige 57 qui peut être actionnée par un cylindre de compression (non représenté) ou par une tringlerie en contact avec un disque de came monté sur l'arbre principal 11 (non représentée).

Après l'enlèvement de la plume, le manteau préparé peut être retiré de l'élément 35 de maintien pour être soumis à d'autres opérations de traitement, par exemple à des opérations de rinçage, d'élimination de la peau extérieure et des ailes et de coupe en rondelles. Ceci peut être réalisé manuellement, mais ces opérations peuvent également être effectuées mécaniquement dans un poste de traitement f), le procédé étant montré schématiquement sur la figure 8. Comme indiqué sur cette figure, un jet d'eau ou d'air comprimé est dirigé vers l'intérieur du manteau 34 par une buse 58. Le manteau est ensuite libéré de l'élément 35 de maintien et éjecté dans une goulotte 59 de décharge qui l'entraîne vers d'autres opérations de traitement. Ce poste peut être disposé dans la position 6 sur la figure 1.

Après que le manteau a été retiré, l'élément 35 de maintien peut recevoir un nouveau calmar qui est attaché en position 7 ou 2 sur la figure 1. Le cycle de traitement est ensuite répété.

Les dimensions des diverses pièces des dispositifs de traitement peuvent être adaptées à la dimension du calmar traité. Etant donné que la taille des calmars peut varier considérablement et qu'elle peut avoir une longueur comprise entre quelques décimètres et un demimètre et plus, la longueur des tentacules non comprise, il est nécessaire de trier les calmars en groupes de tailles avant la préparation, ces groupes étant destinés à des appareils utilisés pour chaque cas spécifique. En général, les calmars ont une longueur d'environ 20 à 30 cm. Il est aisé à l'homme de l'art, en se basant sur ce qui est indiqué dans le présent mémoire, de dimensionner les pièces de travail de l'appareil afin de les adapter à une taille convenable de calmars traités.

L'appareil et ses divers dispositifs de traitement sont de préférence commandés pneumatiquement au moyen de moteurs à air comprimé et de cylindres à air comprimé. L'appareil travaille dans un milieu très humide et, étant donné que des produits alimentaires doivent être traités, il doit souvent être nottoyé d'une manière irréprochable en ce qui concerne l'hygiène, par exemple par un lavage sous haute pression. Les dispositifs de commande électriques conviennent donc moins en raison des risques de courts-circuits dans le milieu humide. Cependant, si les mesures de sécurité nécessaires peuvent être prises, par exemple l'utilisation de boîtiers convenables de protection, etc., rien n'empêche, en principe, d'actionner électriquement au moins une partie de l'appareil, par exemple la commande de l'arbre principal. Une commande hydraulique est également possible dans certains cas.

Pour des raisons analogues, on utilise une commande mécanique pour les divers dispositifs de traitement, par l'intermédiaire de disques de came et de leviers, comme montré sur les figures. Si une commande électrique peut être utilisée, il est également possible de piloter électroniquement les dispositifs de traitement au moyen d'une unité de programmation, d'une manière connue de l'homme de l'art.

En ce qui concerne les matériaux utilisés pour la réalisation de l'appareil, il convient d'employer des matériaux convenant aux manipulations de produits alimentaires et à une utilisation en milieu humide. Dans ce cas, l'acier inoxydable s'est révélé satisfaisant. La réalisation mécanique simple des éléments de machine incorporés dans l'appareil peut être aisément déterminée par l'homme de l'art sur la base des indications données dans le présent mémoire.

La description précédente a porté sur une forme préférée de réalisation de l'appareil selon l'invention, dans lequel les divers postes de traitement sont disposés en cercle, et les calmars sont déplacés d'un poste à l'autre par mise en place sur un plateau tournant pas à pas. Cependant, il est évident que cette forme de réalisation n'est pas la seule possible. Les éléments de maintien des calmars peuvent être disposés, par exemple, sur un transporteur qui est réalisé en partie afin d'exécuter un mouvement intermittent en ligne droite. Les éléments de maintien sont alors arrêtés dans des postes de traitement disposés suivant une ligne droite, mais fonctionnant autrement de la même manière que celle décrite précédemment. Si le transporteur est disposé en boucle fermée, les éléments de maintien peuvent être ramenés en position de départ après l'achèvement de la préparation et l'enlèvement des mateaux préparés, position dans laquelle un nouveau cycle de traitement peut commencer. Les modifications apportées à la conception et au fonctionnement des divers dispositifs de traitement nécessaires peuvent être aisément effectuées par l'homme de l'art à partir des indications données dans le présent mémoire.

L'appareil selon l'invention permet donc de préparer et d'apprêter mécaniquement des calmars pour la préparation d'un produit alimentaire, d'une manière simple et économiquement avantageuse.

**Revendications**

1. Appareil pour la préparation mécanique de mollusques, en particulier de calmars, caractérisé en ce qu'il comprend:

a) un poste (2) pour la fixation du calmar à un dispositif de maintien (35) destiné à maintenir le calmar pendant la préparation;

b) un poste comportant un dispositif (37) destiné à couper les tentacules du calmar en laissant la tête;

c) un poste (3) comportant un organe de coupe (41) destiné à détacher les viscères de la paroi du manteau du calmar, ainsi qu'un dispositif de prise (43) destiné à prendre et extraire du manteau du calmar la tête (42) et les viscères (40) qui lui sont associés;

d) un poste (4) comportant un dispositif (46) destiné à enlever au moins un partie du tissue recouvrant la portion intérieure du manteau située au-dessus de la plume du calmar;

e) un poste (5) comportant un dispositif (54) destiné à prendre et extraire la plume (53) du manteau;

f) un poste facultatif comportant un dispositif (58, 59) destiné à retirer le manteau préparé du dispositif de maintien et à le transporter pour qu'il soit soumis à un autre traitement; et

g) un dispositif (1) destiné à faire passer le dispositif de maintien et le calmar successivement dans les postes a)—f) et à ramener le dispositif de maintien au poste a) pour qu'il reçoive un nouveau calmar.

2. Appareil selon la revendication 1, caractérisé en ce que le dispositif de maintien (35) comprend un dispositif de forme en U destiné à être introduit dans le manteau du calmar de manière que les deux branches du U soient placées à l'intérieur du manteau et reposent contre ce dernier, sur chaque côté de la plume.

3. Appareil selon la revendication 1, caractérisé en ce que l'organe de coupe (37) destiné à enlever les tentacules comprend un couteau rotatif.

4. Appareil selon la revendication 1, caractérisé en ce que l'organe de coupe (41) destiné à détacher les viscères comprend une lame de couteau qui est introduite dans le manteau, à proximité de la paroi de la partie de ce manteau où se trouve la plume.

5. Appareil selon la revendication 1, caractérisé en ce que le dispositif (46) destiné à enlever le tissu de l'intérieur du manteau comprend une bande menée de râpage ou de raclage qui est introduite dans le manteau.

6. Appareil selon la revendication 1, caractérisé en ce que le dispositif (54) de prise et d'extraction de la plume comprend un dispositif (36, 57) destiné à presser le manteau vers l'avant et vers le dispositif de prise, à l'extrémité extérieur de la plume, afin que cette extrémité soit libérée, et une pince (54) destinée à prendre et extraire la plume.

7. Appareil selon la revendication 1, caractérisé en ce que le dispositif destiné à enlever le manteau préparé comprend un dispositif (58) destiné à insuffler de l'air comprimé à l'intérieur du manteau afin de libérer ce dernier du dispositif de maintien.

8. Appareil selon l'une quelconque des revendications 1 à 7, caractérisé en ce que les postes de traitement b)—f) sont disposés en cercle et en ce que le dispositif de maintien (35) portant le calmar est déplacé pas à pas de manière à passer successivement dans les postes de traitement.

9. Appareil selon la revendication 8, caractérisé en ce que plusieurs dispositifs de maintien sont disposés en cercle sur un plateau tournant (1) et en ce que les postes de traitement b)—f) sont disposés le long de la circonférence du cercle, une ouverture étant ménagée dans le plateau pour chaque disposite de maintien de manière que les dispositifs de traitement situés dans les postes puissent traiter le calmar en passant dans lesdites ouvertures.

**Patentansprüche**

1. Vorrichtung zum Verarbeiten von Mollusken, insbesondere Tintenfisch, dadurch gekennzeichnet, daß sie besteht aus:
a) einer Station (2) zum Befestigen des Tintenfischs an einer Haltevorrichtung (35), die zum Halten des Tintenfischs während der Verarbeitung dient;
b) einer Station mit einer Vorrichtung (37) zum Abschneiden der Arme des Tintenfischs, jedoch nicht des Kopfes;

c) einer Station (3) mit einem Schneidorgan (41) zum Lösen der Eingeweide von der Wand des Mantels des Tintenfischs sowie einer Greifvorrichtung (43) zum Ergreifen und Herausziehen des Kopfs (42) und der an ihm hängenden Eingeweide (40) aus dem Mantel des Tintenfischs;
d) einer Station (4) mit einer Vorrichtung (46), die dazu dient, mindestens einen Teil des Gewebes zu entfernen, das den Innenteil des Mantels über dem Schulp des Tintenfischs bedeckt;
e) einer Station (5) mit einer Vorrichtung (54) zum Greifen und Herausziehen des Schulps (53) aus dem Mantel;
f) wahlweise einer Station mit einer Vorrichtung (58, 59), die dazu dient, den verarbeiteten Mantel aus der Haltevorrichtung herauszunehmen und weiterzubefördern, damit er anderweitig bearbeitet werden kann, und
g) einer Vorrichtung (1), die dazu dient, die Haltevorrichtung mit dem Tintenfisch nacheinander an die Stationen a) bis f) zu führen und die Haltevorrichtung an die Station a) zurückzuführen, damit ein neuer Tintenfisch aufgrenommen werden kann.

2. Vorrichtung nach Anspruch 1, dadurch gekennzeichnet, daß die Haltevorrichtung (35) ein U-förmiges Bauteil aufweist, das derart in den Mantel des Tintenfischs einzuführen ist, daß die beiden Schenkel des U sich innerhalb des Mantels befinden und an ihm beiderseits des Schulps anliegen.

3. Vorrichtung nach Anspruch 1, dadurch gekennzeichnet, daß das zum Entfernen der Arme bestimmte Schneidwerkzeug (37) als Drehmesser ausgebildet ist.

4. Vorrichtung nach Anspruch 1, dadurch gekennzeichnet, daß das zum Lösen der Eingeweide dienende Schneidwerkzeug (41) eine Messerklinge aufweist, die in den Mantel in die Nähe der Wand des Teils des Mantels eingeführt wird, wo sich der Schulp befindet.

5. Vorrichtung nach Anspruch 1, dadurch gekennzeichnet, daß die Vorrichtung (46) zum Entfernen des Gewebes von der Innenseite des Mantels eine angetriebene bandförmige Reibe- oder Schabevorrichtung umfaßt, die in den Mantel eingeführt wird.

6. Vorrichtung nach Anspruch 1, dadurch gekennzeichnet, daß die Vorrichtung (54) zum Greifen und Herausziehen des Schulps eine Vorrichtung (36, 57) umfaßt, dioe dazu dient, den Mantel nach vorn und gegen die Greifvorrichtung am äußeren Ende des Schulps zu drücken, damit dieses Ende freigelegt wird, sowie eine Zange (54) zum Ergreifen und Herausziehen des Schulps.

7. Vorrichtung nach Anspruch 1, dadurch gekennzeichnet, daß die Vorrichtung zum Wegführen des verarbeiteten Mantels eine Vorrichtung (58) zum Einblasen von Druckluft in das Innere des Mantels umfaßt, damit dieser von der Haltevorrichtung abgehoben wird.

8. Vorrichtung nach einem der Ansprüche 1 bis 7, dadurch gekennzeichnet, daß die Behandlungsstationen b) bis f) auf einem Kreise angeordnet sind, und daß die den Tintenfisch haltende Vorrichtung (35) schrittweise verschoben wird, so daß sie nacheinander in die behandlungsstationen einläuft.

9. Vorrichtung nach Anspruch 8, dadurch gekennzeichnet, daß mehrere Haltevorrichtungen an einer Kreislinie auf einem Drehtisch (1) angeordnet sind, und daß die Behandlungsstationen b) bis f) sich an der kreislinie befinden, wobei in dem Drehtisch für jede Haltevorrichtung eine Öffnung derart angebracht ist, daß die an den Stationen befindlichen Behandlungsvorrichtungen den Tintenfisch bearbeiten können, indem sie durch die genannten Öffnungen greifen.

## Claims

1. An apparatus for the mechanical trimming of molluscs, especially squid, characterized in that it comprises

a) a station (2) for attachment of the squid to holding means (35) for holding its during the trimming;

b) a station having cutting means (37) for cutting the tentacles of the squid, leaving its head;

c) a station (3) having a cutter (41) for loosening the viscera of the squid from its mantle wall, and with gripping means (43) for gripping and extracting the head (42) of the squid with its associated viscera (40) from the mantle;

d) a station (4) having means (46) for removing at least part of the tissue on the inside part of the mantle located above the pen in the squid;

e) a station (5) having gripping means (54) for gripping and extracting the pen (53) from the mantle, and

f) an optional station having a device (58, 59) for removing the trimmed mantle from the holding means and transport of the mantle for further treatment; and

g) means (1) for transporting the holding means with the squid successively through the stations a)—f) and for returning the holding means to the station a) for receiving a new squid.

2. The apparatus of claim 1, characterized in that the holding means (35) consists of a U-shaped device for introduction into the mantle of the squid in such a way that the two prongs of the U are inside the mantle and rest against it on each side of the pen.

3. The apparatus of claim 1, characterized in that the cutter (37) for removing the tentacles consists of a rotating knife.

4. The apparatus of claim 1, characterized in that the cutter (41) for loosening the viscera consists of a knife blade, which is introduced into the mantel close to its wall at the part thereof where the pen is located.

5. The apparatus of claim 1, characterized in that the means (46) for removing the tissue on the inside of the mantle consists of a driven grinding or rasping band, which is introduced into the mantle.

6. The apparatus of claim 1, characterized in that the means (54) for gripping and extracting the pen comprises a device (36, 57) for pressing the mantle forwards towards the gripping means at the outer end of the pen so that this end is released, and a clamping device (54) for gripping and extracting the pen.

7. The apparatus of claim 1, characterized in that the means for removing the trimmed mantle consists of a device (58) for blowing compressed air into the mantle so that it is freed from the holding means.

8. The apparatus of any one of claims 1—7, characterized in that the stations of treatment b)—f) are arranged in a circular form and the holding means (35) with the squid is stepwise successively conveyed to the treatment stations.

9. The apparatus of claim 8, characterized in that a plurality of holding means are arranged in a circular form on a rotatable table (1), and that the stations of treatment b)—f) are arranged along the circumference of the circle, an aperture being arranged in the table at each holding means, through which apertures the means for treatment at the stations can treat the squid.

# FIG.1

FIG. 2

FIG.3  FIG.3a  FIG.4  FIG.4a

FIG.5

FIG.6

# FIG.7

# FIG.8